# EUROPÄISCHE PATENTSCHRIFT

(11) **EP 3 819 520 B1**
(45) Veröffentlichungstag und Bekanntmachung des Hinweises auf die Patenterteilung: **30.11.2022**
(21) Anmeldenummer: 20200174.9
(22) Anmeldetag: 06.10.2020
(51) Int. Cl.: F16F 15/30, F16F 15/315, A01F 15/00

(54) **ENERGIESPEICHERANORDNUNG**
ENERGY STORAGE ASSEMBLY
SYSTÈME DE STOCKAGE D'ÉNERGIE

(30) Priorität: 22.10.2019 DE 202019004357 U; 23.10.2019 DE 202019004369 U
(43) Veröffentlichungstag der Anmeldung: 12.05.2021
(73) Patentinhaber: Deere & Company, Moline, IL 61265 (US)
(72) Erfinder: Ballester, Hector, 68163 Mannheim (DE); Zarzuela, Elias, 68163 Mannheim (DE)
(74) Vertreter: Reichert, Christian

(56) Entgegenhaltungen:
- CN-U- 203 427 955
- GB-A- 2 519 116

## Beschreibung

Die vorliegende Erfindung betrifft eine Energiespeicheranordnung zum Speichern, Halten und Abrufen von Drehmoment.

Landwirtschaftliche Maschinen, etwa Ballenpressen, Heuwender, Erntemaschinen verfügen über angetriebene Wellen, welche den Mechanismus steuern. Bei einer Ballenpresse wird der Verdichterkolben, der das aufgenommene Mähgut zusammenpresst von einem Pleuel angetrieben, welches wiederrum über ein Zwischengetriebe von der Zapfwelle betrieben wird. Die Lastzyklen an derartige Maschinen sind nicht homogen und auch die Lasthöhe kann mit jedem Arbeitszyklus stark schwanken. Die Antriebsleistung, welche bei diesen wechselnden Bedingungen abgerufen wird, erzeugt hohe Last am gesamten Antriebsstrang und auch im Fahrkomfort der Zugmaschine oder des Traktors.

Das Dokument CN203427955U offenbart eine Energiespeicheranordnung entsprechend dem Oberbegriff des Anspruchs 1.

Es ist eine Aufgabe der vorliegenden Erfindung, diese Probleme zu lösen.

Die Aufgabe wird gelöst durch die Erfindung nach Anspruch 1, weitere erfinderische Lösungen sind in den Unteransprüchen beschrieben.

Die Erfindung betrifft eine Energiespeicheranordnung, die eine Welle, zum Übertragen von Drehmoment, ein Gehäuse, einen Aktuator, der axial bewegt werden kann, einen Freilauf zwischen Welle und Aktuator, der auf der Welle befestigt ist, und in eine Drehrichtung kein Drehmoment überträgt, einen Energiespeicher, der Drehmoment speichern kann, ein Abstützelement, wobei der Energiespeicher einerseits am Abstützelement, andererseits am Aktuator befestigt ist, eine äußere Kupplung, zwischen dem Gehäuse und dem Abstützelement und eine innere Kupplung zwischen dem Abstützelement und der Welle aufweist, wobei der Aktuator durch axiales Verschieben einerseits das Gehäuse kontaktieren kann, anderseits das Abstützelement, so dass durch den Aktuator entweder die Welle mit dem Gehäuse oder die Welle mit dem Abstützelement verbunden wird, und eine relative Verdrehung zwischen dem Aktuator und dem Abstützelement ermöglicht wird, so dass durch die Schaltung der inneren und äußeren Kupplungen und des Aktuators Drehmoment aufgeladen, entladen oder gehalten werden kann.

Die Energiespeichereinrichtung kann in direkter Umgebung der Welle vorgesehen sein, und stützt sich am Gehäuse, bzw. am Chassis der Maschine ab. Durch das Speichern von Drehmoment während der Anwendung kann dieses zu einem späteren Zeitpunkt abgerufen werden und unterstützt die Welle bei Antrieb der Arbeitsmaschine. Leistungsspitzen, die während dem Betrieb kurzzeitig auftreten, können damit abgefangen oder gemindert werden. Dies entlastet den Antriebsstrang und führt zu einer Reduktion der Schwingungen in der Maschine, sowie im Zugfahrzeug, somit ist der Komfort gesteigert. Die Energiespeicheranordnung kann so ausgelegt sein, dass die Unterstützung bei Abruf lediglich einige Sekunden andauert, solange die Lastspitzen dadurch gedämpft oder neutralisiert werden. Durch den Aufbau wird die Energiespeicheranordnung aufgeladen, wenn die Welle in Richtung der Orientierung des Freilaufs rotiert, wobei durch Schalten der Kupplungen der Aufladezustand bestimmt wird.

Für das Aufladen des Energiespeichers kann die innere Kupplung geschlossen werden, und das Abstützelement zusammen mit der Welle rotieren, und der Aktuator gegen das Gehäuse verblockt sein

Durch Schließen der inneren Kupplung wird das Abstützelement mit der Welle drehfest verbunden, wobei der Aktuator zeitgleich eine drehfeste Verbindung zwischen einer Seite des Energiespeichers und des Gehäuses herstellt. Der Energiespeicher wird durch die relative Verdrehung zwischen dem Abstützelement und dem Aktuator aufgeladen.

In der Energiespeicheranordnung kann für das Halten des Drehmoments im Energiespeicher die innere Kupplung geschlossen werden, und das Abstützelement zusammen mit der Welle rotieren, und der Aktuator gegen das Abstützelement verblockt werden.

Für das Entladen des Energiespeichers kann die äußere Kupplung geschlossen werden, und das Abstützelement zusammen mit dem Gehäuse gehalten werden, und der Aktuator in einer Mittelstellung sein, bei der keine Verblockung stattfindet.

Der Freilauf kann als Rollenfreilauf ausgebildet sein. Hierdurch kann einen hohe Lebensdauer erreicht werden, wobei die bewegten Massen der Freilaufs reduziert sind.

Der Freilauf als Sperrklinke ausgebildet sein.

Der Energiespeicher kann ein Federspeicher, ein Kolbenspeicher oder ein Schwungradspeicher sein. Als Federspeicher ist eine einfache Wartung umsetzbar. Ein Kolbenspeicher bietet eine hohe Energiedichte mit geringem Einbauraum. Ein Schwungrad bietet gute Dämpfungsmöglichkeiten durch die hohe Masse.

Der Aktuator kann durch ein relatives Verdrehen zur Welle axial verstellt werden. Mit einer Gewindespindel bietet sich eine wartungsarmes Konzept, das sehr genau im Verfahrweg einstellbar ist und je nach Steigung hohe Kräfte abstützen kann.

Weitere Ausbildungen der Erfindung werden anhand der Figuren beschrieben. Dabei zeigt
Figur 1 die Energiespeicheranordnung in einem Haltezustand, in dem weder Aufgeladen noch Entladen wird;
Figur 2 den Aufladezustand, in dem Drehmoment in den Energiespeicher eingeleitet wird;
Figur 3 den Entladezustand, in dem Drehmoment aus dem Energiespeicher entnommen wird.

Die Energiespeicheranordnung 100 besteht aus einer Welle 110, die zur Einleitung und zum Abrufen von Drehmoment verwendet wird. Die Welle 110 kann ein Antrieb für eine Aufnahmevorrichtung für Mähgut, für einen Kolben einer Ballenpresse oder für ähnliche Aufgaben verwendet werden. Die Welle 110 ist innerhalb eines Gehäuses 120 drehbar gehalten, üblicherweise über Lager, die hier nicht gezeigt sind.

Auf der Welle 110 ist ein Freilauf 140 angebracht, dieser kann aus mehreren Segmenten bestehen. Der Freilauf 140 ist in einer Drehrichtung ohne Widerstand, so dass Drehmoment in dieser Drehrichtung nicht übertragen wird. In die andere Drehrichtung aktiviert der Freilauf 140 eine Sperre, so dass das eingeleitete Drehmoment von und zur Welle 110 übertragen wird.

Am Freilauf 140 ist ein Aktuator 130 vorgesehen, der über den Freilauf 140 mit der Welle 110 verbunden ist. Drehmoment vom Aktuator 130 wird in einer Drehrichtung zur Welle 110 übertragen. Der Aktuator 130 ist in axialer Richtung der Welle 110 verstellbar und weist an seinen axialen Enden jeweils eine Kontaktfläche auf, so dass durch das axiale Verschieben des Aktuators 130 entweder eine Kontaktfläche in Eingriff kommt, oder der Aktuator 130 in einer Mittelstellung gehalten ist, in der keine der Kontaktflächen in Eingriff ist.

Am Aktuator 130 ist drehfest ein Eingang des Energiespeichers 150 befestigt. Der Energiespeicher 150 kann Drehmoment aufnehmen, halten und wieder abgeben.

An einer Außenseite des Energiespeichers 150 ist dieser am Abstützelement 160 befestigt. Das Abstützelement 160 umschließt den Energiespeicher 150 derart, dass der Aktuator 130 sich in einer Position am Abstützelement 160 anlegen kann und eine drehfeste Verbindung herstellt. Das Abstützelement 160 hat ebenfalls eine Kontaktfläche, um die Reibung im Kontakt mit dem Aktuator 130 zu verbessern.

Zwischen dem Abstützelement 160 und der Welle 110 einerseits und dem Gehäuse 120 andererseits ist jeweils eine schaltbare Kupplung 170, 172 vorgesehen. Durch die Kupplungen 170, 172 wird eine drehfeste Verbindung zwischen Welle 110 und Abstützelement 160 oder zwischen dem Abstützelement 160 und dem Gehäuse 120 geschaltet. Durch das Zusammenspiel der Kupplungen 170, 172 und den Positionen des Aktuators 130 kann der Energiespeicher 150 zwischen den Zuständen Halten, Aufladen und Entladen umgeschaltet werden.

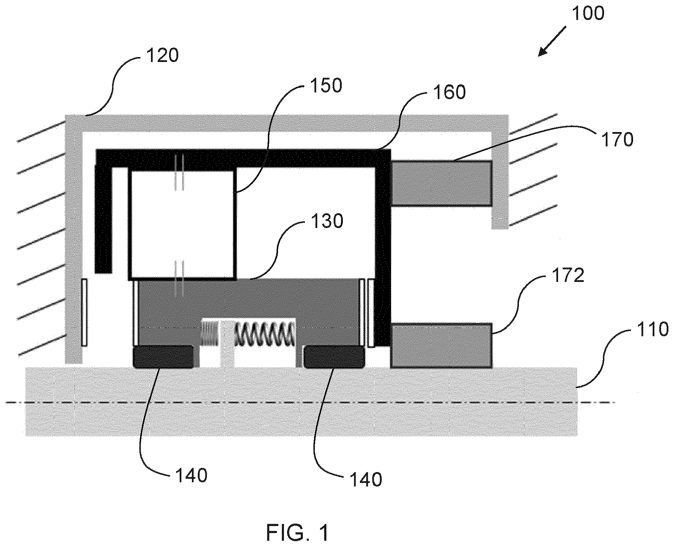

In Figur 1 ist der Haltezustand der Energiespeicheranordnung 100 dargestellt. Der Aktuator 130 ist so geschaltet, dass er eine drehfeste Verbindung zwischen dem Abstützelement 160 und dem Energiespeicher 150 herstellt. Der Energiespeicher 150, der bereits auf einer Eingangsseite drehfest mit dem Abstützelement 160 verbunden ist, befindet sich dadurch in einem geblockten Zustand, da beide Eingänge gegen das Abstützelement 160 drehfest gehalten sind.

Gleichzeitig ist die innere Kupplung 172 geschlossen und die äußere Kupplung 170 geöffnet, so dass die Welle 110 drehfest mit dem Abstützelement 160 verbunden ist. Eine Drehung der Welle 110 führt zu einer Drehung des Abstützelements 160 und des Aktuators 130, so dass Drehmoment innerhalb des Energiespeichers 150 nicht abgenommen werden kann. Der Energiespeicher 150 dreht zusammen mit der Welle 110 um die gemeinsame Achse.

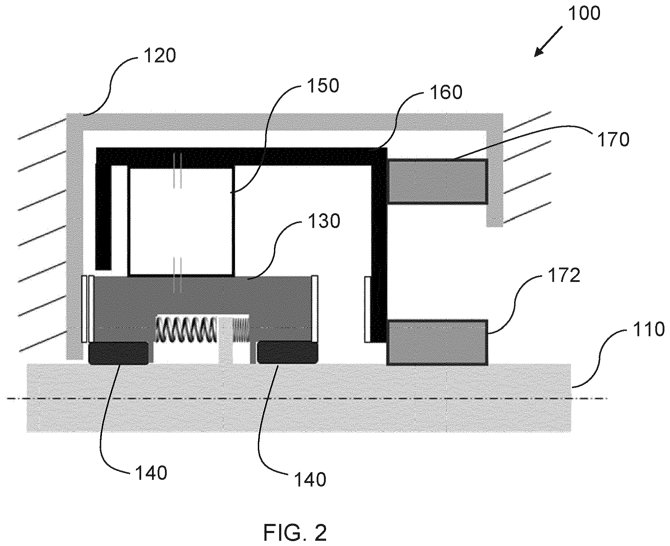

In Figur 2 ist der Aufladezustand der Energiespeicheranordnung 100 dargestellt. Der Aufladezustand dient dazu, Drehmoment im Energiespeicher 150 zu speichern, um es zu einem späteren Zeitpunkt abzurufen. Der Aktuator 130 ist derart geschaltet, dass er das Gehäuse 120 mit einer Kontaktfläche drehfest verbindet. Gleichzeitig ist die innere Kupplung 172 geschlossen, so dass das Abstützelement 160 zusammen mit der Welle 110 rotiert und so die Welle 110 an einen Eingang des Energiespeichers 150 koppelt. Der Freilauf 140 stellt sicher, dass eine Drehung der Welle 110 nicht zu einer Drehung des Aktuators 130 führt, dieser ist gegen das feststehende Gehäuse 120 gekoppelt. Die äußere Kupplung 170 ist geöffnet, so dass das Abstützelement 160 gegenüber dem Gehäuse 120 frei drehbar ist. Eine Rotation der Welle 110 führt über die innere Kupplung 172 zu einer Rotation des Abstützelements 160, dies wiederrum zu einer Drehmomenteinleitung in den Energiespeicher 150. Dieser ist mit einem Eingang über den Aktuator 130 drehfest am Gehäuse 120 gehalten, so dass die Rotation des Abstützelements 160 zu einem Aufladen des Energiespeichers 150 führt.

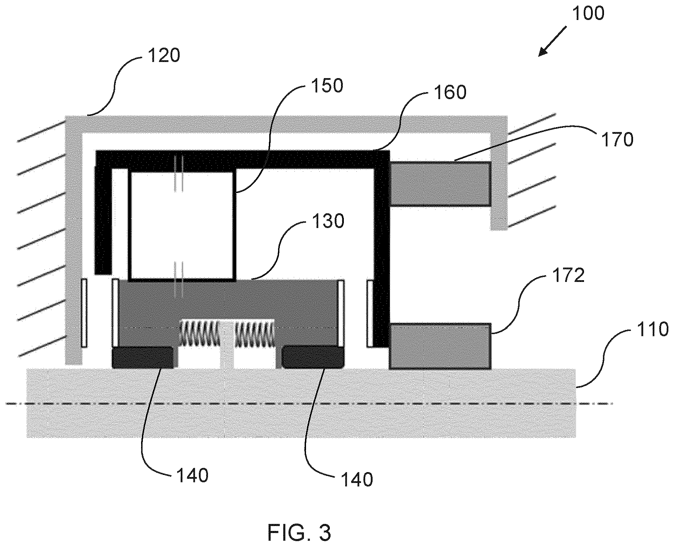

In Figur 3 ist der Entladezustand gezeigt. Der Aktuator 130 befindet sich in einer mittleren Position, in der weder das Abstützelement 160, noch das Gehäuse 120 kontaktiert werden. Die äußere Kupplung 170 ist geschlossen und verbindet das Gehäuse 120 drehfest mit dem Abstützelement 160, während die innere Kupplung 172 offen ist. Der Energiespeicher 150 ist an einem Eingang drehfest über das Abstützelement 160 mit dem Gehäuse 120 verbunden, am anderen Eingang über den Aktuator 130 und den Freilauf 140 drehfest mit der Welle 110. Drehmoment, welches im Energiespeicher 150 enthalten ist, ist einseitig am Gehäuse 120 abgestützt, so dass Drehmoment vom Energiespeicher 150 auf die Welle 110 abgegeben wird.

Der Energiespeicher 150 kann das Drehmoment auch in Form eines Kolbenspeichers oder eines Schwungradspeichers aufnehmen. Die Funktionsweise über die Kupplungen 170, 172 kann mit Modifikationen übernommen werden.

## Patentansprüche

1. Energiespeicheranordnung (100), aufweisend
eine Welle (110), zum Übertragen von Drehmoment, ein Gehäuse (120),
einen Aktuator (130), der axial bewegt werden kann,
einen Energiespeicher (150), der Drehmoment speichern kann,
ein Abstützelement (160), eine innere Kupplung (172) zwischen dem Abstützelement (160) und der Welle (110), wobei der Aktuator (130) durch axiales Verschieben einerseits das Gehäuse (120) kontaktieren kann, anderseits das Abstützelement (160), so dass durch den Aktuator (130) entweder die Welle (110) mit dem Gehäuse (120) oder die Welle (110) mit dem Abstützelement (160) verbunden wird, und
**dadurch gekennzeichnet, dass** die Energiespeicheranordnung weiter aufweisend einen Freilauf zwischen Welle und Aktuator, der auf der Welle befestigt ist, und
in eine Drehrichtung kein Drehmoment überträgt, eine äußere Kupplung (170), zwischen dem Gehäuse (120) und dem Abstützelement (160), und dass der Energiespeicher (150) einerseits am Abstützelement (160), andererseits am Aktuator (130) befestigt ist, und dass
eine relative Verdrehung zwischen dem Aktuator (130) und dem Abstützelement (160) ermöglicht wird,
so dass durch die Schaltung der inneren und äußeren Kupplungen (170, 172) und des Aktuators (130) Drehmoment aufgeladen, entladen oder gehalten werden kann.

2. Energiespeicheranordnung (100) nach Anspruch 1, wobei für das Aufladen des Energiespeichers (150) die innere Kupplung (172) geschlossen wird, und das Abstützelement (160) zusammen mit der Welle (110) rotiert, und der Aktuator (130) gegen das Gehäuse (120) verblockt wird.

3. Energiespeicheranordnung (100) nach einem der vorangehenden Ansprüche, wobei für das Halten des Drehmoments im Energiespeicher (150) die innere Kupplung (172) geschlossen wird, und das Abstützelement (160) zusammen mit der Welle (110) rotiert, und der Aktuator (130) gegen das Abstützelement (160) verblockt wird.

4. Energiespeicheranordnung (100) nach einem der vorangehenden Ansprüche, wobei für das Entladen des Energiespeichers (150) die äußere Kupplung (170) geschlossen wird, und das Abstützelement (160) zusammen mit dem Gehäuse (120) gehalten wird, und der Aktuator (130) in einer Mittelstellung ist, bei der keine Verblockung stattfindet.

5. Energiespeicheranordnung (100) nach einem der vorangehenden Ansprüche, wobei der Freilauf (140) als Rollenfreilauf ausgebildet ist.

6. Energiespeicheranordnung (100) nach einem der Ansprüche 1 bis 4, wobei der Freilauf (140) als Sperrklinke ausgebildet ist.

7. Energiespeicheranordnung (100) nach einem der vorangehenden Ansprüche, wobei der Energiespeicher (150) ein Federspeicher, ein Kolbenspeicher oder ein Schwungradspeicher ist.

8. Energiespeicheranordnung (100) nach einem der vorangehenden Ansprüche, wobei der Aktuator (130) durch ein relatives Verdrehen zur Welle (110) axial verstellt wird.

## Claims

1. Energy storage assembly (100), having
a shaft (110) for transmitting torque,
a housing (120),
an actuator (130) which can be moved axially,
an energy store (150) which can store torque,
a supporting element (160), an inner clutch (172) between the supporting element (160) and the shaft (110), wherein, by means of axial displacement, the actuator (130) can contact the housing (120) on the one hand, the supporting element (160) on the other hand, so that either the shaft (110) is connected to the housing (120) or the shaft (110) is connected to the supporting element (160) by the actuator (130), and
**characterized in that** the energy storage assembly further has a freewheel between the shaft and actuator, which is fixed to the shaft, and transmits no torque in one direction of rotation, an outer clutch (170) between the housing (120) and the supporting element (160), and **in that** the energy store (150) is fixed to the supporting element (160) on the one hand and to the actuator (130) on the other hand, and **in that** a relative rotation between the actuator (130) and the supporting element (160) is made possible,
so that, by means of shifting the inner and outer clutches (170, 172) and the actuator (130), torque can be charged up, discharged or retained.

2. Energy storage assembly (100) according to Claim 1, wherein, to charge up the energy store (150), the inner clutch (172) is engaged and the supporting element (160) rotates together with the shaft (110), and the actuator (130) is jammed against the housing (120).

3. Energy storage assembly (100) according to one of the preceding claims, wherein, to retain the torque in the energy store (150), the inner clutch (172) is engaged and the supporting element (160) rotates together with the shaft (110), and the actuator (130) is jammed against the supporting element (160).

4. Energy storage assembly (100) according to one of the preceding claims, wherein, to discharge the energy store (150), the outer clutch (170) is engaged and the supporting element (160) is held together with the housing (120), and the actuator (130) is in a central position, in which no jamming takes place.

5. Energy storage assembly (100) according to one of the preceding claims, wherein the freewheel (140) is designed as a roller freewheel.

6. Energy storage assembly (100) according to one of Claims 1 to 4, wherein the freewheel (140) is designed as a pawl.

7. Energy storage assembly (100) according to one of the preceding claims, wherein the energy store (150) is a spring accumulator, a piston accumulator or a flywheel store accumulator.

8. Energy storage assembly (100) according to one of the preceding claims, wherein the actuator (130) is displaced axially by a rotation relative to the shaft (110) .

## Revendications

1. Système d'accumulation d'énergie (100), présentant
un arbre (110) pour transmettre un couple,
un boîtier (120),
un actionneur (130) qui peut être déplacé axialement,
un accumulateur d'énergie (150) qui peut accumuler un couple,
un élément porteur (160), un couplage interne (172) entre l'élément porteur (160) et l'arbre (110), l'actionneur (130) pouvant par un déplacement axial contacter d'une part le boîtier (120) et d'autre part l'élément porteur (160) de sorte que l'actionneur (130) relie soit l'arbre (110) au boîtier (120), soit l'arbre (110) à l'élément porteur (160), et
**caractérisé en ce que** le système d'accumulation d'énergie présente en outre un dispositif de roue libre entre l'arbre et l'actionneur, qui est fixé à l'arbre et ne transmet aucun couple dans un sens de rotation, un couplage externe (170) entre le boîtier (120) et l'élément porteur (160), et **en ce que** l'accumulateur d'énergie (150) est fixé d'une part à l'élément porteur (160) et d'autre part à l'actionneur (130), et **en ce qu'**une torsion relative entre l'actionneur (130) et l'élément porteur (160) est rendue possible de sorte que la commutation des couplages interne et externe (170, 172) et de l'actionneur (130), un couple peut être chargé, déchargé ou maintenu.

2. Système d'accumulateur d'énergie (100) selon la revendication 1, dans lequel le couplage interne (172) est fermé pour charger l'accumulateur d'énergie (150), et l'élément porteur (160) tourne avec l'arbre (110), et l'actionneur (130) est bloqué par rapport au boîtier (120).

3. Système d'accumulateur d'énergie (100) selon l'une quelconque des revendications précédentes, dans lequel le couplage interne (172) est fermé pour maintenir le couple dans l'accumulateur d'énergie (150), et l'élément porteur (160) tourne avec l'arbre (110), et l'actionneur (130) est bloqué par rapport à l'élément porteur (160).

4. Système d'accumulateur d'énergie (100) selon l'une quelconque des revendications précédentes, dans lequel le couplage externe (170) est fermé pour la décharge de l'accumulateur d'énergie (150), et l'élément porteur (160) est maintenu avec le boîtier (120), et l'actionneur (130) se trouve dans une position centrale dans laquelle aucun blocage n'a lieu.

5. Système d'accumulateur d'énergie (100) selon l'une quelconque des revendications précédentes, dans lequel le dispositif de roue libre (140) est réalisé sous forme de dispositif de roue libre à rouleaux.

6. Système d'accumulateur d'énergie (100) selon l'une quelconque des revendications 1 à 4, dans lequel le dispositif de roue libre (140) est réalisé sous forme de cliquet d'arrêt.

7. Système d'accumulateur d'énergie (100) selon l'une quelconque des revendications précédentes, dans lequel l'accumulateur d'énergie (150) est un accumulateur à ressort, un accumulateur à piston ou un accumulateur à volant d'inertie.

8. Système d'accumulateur d'énergie (100) selon l'une quelconque des revendications précédentes, dans lequel l'actionneur (130) est réglé axialement par une torsion relative par rapport à l'arbre (110).
